# EUROPEAN PATENT APPLICATION

(11) **EP 1 786 208 A1**
(43) Date of publication of application: **16.05.2007**
(21) Application number: 05024780.8
(22) Date of filing: 14.11.2005
(51) Int. Cl.: H04N 7/24

(54) **Apparatus and method for an improved selection of a media channel**

(71) Applicant: Sony Ericsson Mobile Communications AB, 221 88 Lund (SE)
(72) Inventor: Martensson, Joakim, 226 42 Lund (SE); Aberg, Kristoffer, 224 68 Lund (SE); Rydenhag, Tobias, 221 28 Malmö (SE)
(74) Representative: Dahnér, Christer

(57) **Abstract**

The present invention relates to a portable electronic device provided for receiving and selecting presentation data and displayable meta data of a plurality of media channels, which presentation data includes video data, audio data or a combination thereof, said receiving device (10) comprising:
means (11) for presenting a media channel,
a receiver (12) for receiving said media channel(s) and meta data,
a control unit (13) for controlling which media channel and/or meta data to be presented and arranged to receive user input for selecting a media channel, and
a user input unit (14) for receiving a media channel selection manipulation performed by the user and providing media channel selection information to the control unit (13) depending on user input, wherein the control unit (13) is arranged to control the means (11) for presenting a media channel to present meta data according to the media channel selection during a period of time up to the time it takes to switch to the selected media channel. The invention is also related to a corresponding method.

## Description

### TECHNICAL FIELD

The present invention relates to a portable electronic device provided for receiving and selecting media channels and meta data, and a method for selecting media channels provided for such a portable electronic device.

### BACKGROUND

Today's and future generation of portable (handheld) communication devices, in particular mobile phones provide an increasing amount of new features related to providing multi-media, not just sound to a user thereof. In particular, also video media features have been implemented, for instance the possibility for a user of a portable communication to receive TV broadcast, i. e. to receive and display TV-programs (channels). Because of the ever increasing number of available programs (channels), the user has to be provided with a user-friendly way to select a desired TV program (channel) from all these available.

There are different technologies to transmit broadcasted media such as TV programs. One way is to use DVB-H (Digital Video Broadcast-Handheld), which is provided for broadcasting TV as well as other digital media to hand held devices such as mobile phones.

A problem with the DVB-H standard is the relatively long so-called "zapping time", i. e. the time it takes to switch from one channel (for instance a program) to another. After the user has pressed a "zapping key", i.e. a channel selection key for a plurality of channels, or a particular channel number key, it could take several seconds for the new channel to appear on the display. Typically, when a user selects a new channel, the screen turns black presenting an infinite progress bar (typically, there is nothing giving the user information about how long the loading time is or how loading progress progresses) leaving the user to do nothing but wait for 10-12 seconds, or even more.

Thus, selecting a new channel is often very time consuming and frustrating from a user point of view, although this time delay will probably decrease as the technology make progress.

Typically, the channel switching (zapping) time consist of two main time delays since the video stream is sent out in bursts (time slots), which need to be preloaded/buffered when switching occurs. The first delay is the time until a new burst has been received and the second delay is the time for the audio video codec to be "reloaded", i. e. finding an I-frame. These delays are only a few examples of delay sources present. Thus, also further delay sources increase the time it takes to switch channel.

A solution to this problem proposed is to show a message and a progress bar to give the user feedback that something is happening and that the portable device is processing. However, also this is not a very user friendly solution, since the user has to wait anyway without the possibility to do something useful.

Another solution that is currently discussed is to listen to one or several channels in the background. This is technically possible, but requires much memory and power consumption is also high. It is also hard, or even impossible, to predict which will be the next user channel choice, i.e. which extra channels have to be received in the background. Thus, typically also this is not a very good solution.

The long switching time has many drawbacks. For instance, the long switching time discourages "zapping" behaviour (which generates income to service providers), from a user point of view may be perceived as the portable device, such as a mobile phone comprising a TV application being slow, and in that the poor performance might lead to fewer users of the mobile TV application, i. e. less income for service providers etc.

Thus, in portable electronic devices, such as mobile phones, today, channel switching time, typically referred to as "zapping speed", is still far from what a user is normally used to from normal TV or radio, where a user can select a new channel instantly, and easily zap between channels at high speed.

Thus, there still exist some problems with conventional technology as regards channel selection, at least in a user-friendly way, i. e. fast channel selection without delays, such that rapid channel switching, so-called "zapping" could be provided.

### SUMMARY

The present invention related to a portable electronic device, provided for receiving and selecting media channels, is directed towards taking advantage of the time it takes to switch from one media channel to another.

One object of the present invention is thus to provide a portable electronic device arranged to present divertive information to a user instead of no information during the time it takes to switch from one channel to another.

Since the DVB-H standard and similar standards for portable (handheld) electronic devices includes presentable meta data, for instance in the form of a so-called Electronic Service Guide (ESG), or similar that comprises information (data) corresponding to available channels, according to the invention, by means of presenting data about a particular channel(s) the user is switching to before switching, the user is provided with divertive (but relevant) information, instead of e. g. no information or a progress bar only during the time it takes to switch from one channel to another.

With the above described invention, the user can also check the content of a media channel before switching to it, which saves time, if the content of the media channel is not desired. In this way, the user does not have to wait for the media channel to be loaded, but may decide to switch to it, or not, by means of studying the meta data, such as the ESG only, for a period of time in advance of finally switching to it.

According to a first aspect of the present invention, this object is achieved by a portable electronic device provided for receiving and selecting media channels and presentable meta data of a plurality of media channels, which media channels includes video data, audio data or a combination thereof, said electronic device comprising:
means provided for presenting a media channel,
a receiver for receiving said media channel(s) and meta data,
a control unit for controlling which media channel and/or meta data to be presented and
arranged to receive user input for selecting a media channel, and
a first user input unit for receiving a media channel selection manipulation performed by the user and providing media channel selection information to the control unit depending on user input, wherein the control unit is arranged to control the means for presenting a media channel to present meta data according to the media channel selection during a period of time up to the time it takes to switch to the selected media channel.

A second aspect of the present invention is directed to a device including the features of the first aspect, wherein the user input unit is a zapping key, such as a joystick, provided for selecting one of a plurality of channels.

A third aspect of the present invention is directed towards a device including the features of the first aspect, wherein the user input unit is a numbered key of the keyboard.

A fourth aspect of the present invention is directed towards a device including the features of the second or third aspect, wherein the user input unit is arranged to provide two different states in response to the manipulation performed by the user, a first state responsive to a touch, and a second state responsive to a press manipulation, wherein in the first state the control unit is arranged to select and display meta data only, preferably in the form of an electronic service guide (ESG), and in the second state, the control unit is arranged to also select the media channel. Of course, manipulation could also be provided in some other way, without restricting the invention.

A fifth aspect of the present invention is directed towards a device including the features of the previous aspects, wherein the user input unit is provided in a remote control unit communicating with the device.

The invention is also directed to a method for selecting a media channel and presentable meta data of a plurality of media channels for a portable electronic device, which media channel includes video data, audio data or a combination thereof, said method comprising the steps of:
- receiving a media channel and meta data,
- receiving user input for selecting a media channel,
- selecting and presenting meta data, and loading the channel depending on user input, in response to a selection manipulation performed by the user,
- possibly navigating meta data, and
- presenting the selected media channel when loading is completed.

The invention has a number of advantages. For instance, by presenting relevant information when switching to a new media channel, the user will be kept busy and not feeling that switching to (loading) the new channel takes time, since there is a great difference in perceived speed while doing something interesting compared to waiting passively. Further advantages will be mentioned in the following description of different embodiments.

The invention is also very inexpensive to implement, because it can be implemented using the user input units already provided in the device and the control unit(s) can be provided with just some extra software in addition to the channel selection software already existing.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

These and other objects, advantages and features of the invention will become apparent from the following description thereof taken in conjunction with the accompanying drawings, which illustrate a specific embodiment of the invention. In the drawings:
Fig. 1 is a front view of a portable electronic device for receiving and selecting media channels, such as digital broadcast programs, herein illustrated as an embodiment of the present invention in the form of a mobile phone;
Fig. 2 is a block diagram showing the construction of the portable electronic device for receiving and selecting media channels, herein illustrated as the same embodiment of the present invention in the form of the mobile phone as illustrated in Fig. 1;
Fig. 3 is a flowchart showing a method for receiving and selecting media channels and meta data of a plurality of media channels, such as broadcast programs, for the above-mentioned device according to an embodiment of the present invention.

### DESCRIPTION OF EMBODIMENTS

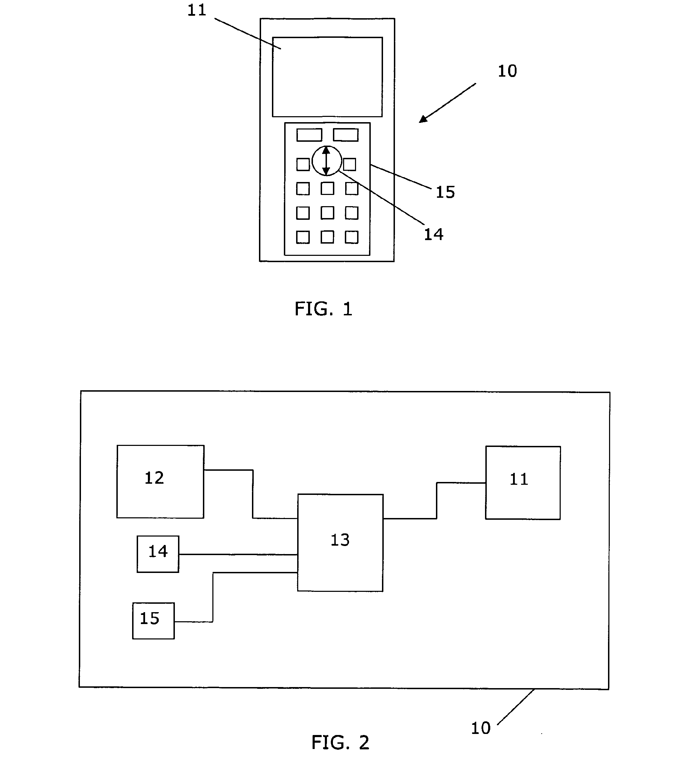

A preferred embodiment of a portable electronic device and thereto related method for receiving and selecting media channels of the present invention will be described with reference to the accompanying drawings, Fig. 1, 2 and 3.

Since the invention is independent of the transmitter side and route, such as broadcast route, of which typical examples of broadcast routes are via ground wave, satellite link etc, and the construction and implementation thereof are well known for a person skilled in the art, only the side related to the invention, i. e. the receiver side is shown and further explained hereinafter. Moreover, the invention is not limited to broadcasted media only, but all types of media transmitted by means of other transmission routes, such as transmission via LAN (Local Area Network) etc, requiring "long" time of transmission (typically when switching to a new media channel) to a portable communication device (because of its nature) and comprising thereto related presentable (typically displayable) meta data such as electronic program guides or the like, which can be transmitted and presented (typically displayed) during loading the media channel (when switching from one media channel to another) could benefit from the invention. Thus, the invention is by no means limited to the embodiments described.

In the preferred embodiment (see Fig. 1), the device is a mobile phone 10 comprising an information presentation unit 11 in the form of a display provided for displaying the received broadcasted media, such as video, to a user (not shown), a receiver 12 for receiving the broadcasted media including media channels and metadata, a control unit 13 for controlling which media channel, to be displayed and arranged to receive user input information such as media channel selection, and a user input unit 14 for receiving a media channel selection manipulation performed by the user. The information presentation unit 11 could include an audio unit for presenting also audio.

In the illustrated embodiment of Fig. 1, the control unit 13 is connected to both the information presentation unit 11 and the receiver 12. The receiver 12 is connected to (or communicating with) the user input unit 14, which provides media channel selection information to the control unit 13 depending on user input, wherein the user input unit 14 is arranged to provide the control unit 13 with information about the media channel selection in response to a channel selection manipulation performed by the user.

Typically, the meta data is in the form of an electronic service guide (ESG).
Herein, the expression ESG is used referred to as an electronic service guide, providing information about broadcast programs. However, also other expressions are sometimes used such as EPG (Electronic Program Guide), for instance within the field of conventional stationary TV. Thus, the invention is by no means limited to ESG only but include all types of meta data, in particular meta data including program guides, known per se within the field of portable devices as well as also known being related to stationary devices such a TV-set or the like.

The mobile phone 10 also has an antenna for receiving transmitted media channels. This is however not shown because it is provided in the interior of the phone (Fig. 1), and well known per se. The receiver 12 for receiving the transmitted (herein broadcasted) media channels is connected to the antenna in a conventional way, thus not shown. The receiver 12 is particularly provided for receiving digital media in the form of digital TV channels, but without departing from the invention, the receiver 12 can be embodied as a receiver for any type of broadcast of other digital media, or other transmitted media.

Typically, the receiver 12 (as well as the entire system, which is not shown) is operating according to well known standards such as DVB (Digital Video Broadcasting) or MPEG2 (Moving Picture Experts Group), herein in particular according to the DVB-H standard provided for handheld devices, in which each channel is sent out in bursts. Between these bursts the receiver 12 can switch to a so-called "low power sleep mode". Typically, a burst is about 300 ms long and a sleep period is about 3 seconds. However, none of these standards will be described in more detail, since they are well known to a person skilled in the art. Hereinafter, it is assumed that DVB-H standard is referred to as an example, but without limiting the invention to this. In particular, the invention is for any type of media channel selection having any type of built-in time delay(s), for instance as explained in relation to DVB-H having sleeping mode to save power. The invention could be applied to all kinds of media channel selection including the problem of slow "zapping" behaviour.

The user input unit 14, is preferably embodied in the form of a joystick, which joystick 14 can be used for selecting different conventional items from a menu of the phone, but in the present invention it has one further function, which will be described in more detail below. Also, the conventional numbered keys of the keypad 15, having numbers ranging from 0-9 could alternatively be employed instead of the described joystick 14, without departing from the invention.

The invention will now be described in more detail with reference to Fig. 1, 2 and 3 by means of a non-limiting example corresponding to an embodiment of the invention. A scenario, when a user switches from one media channel to another, herein from one TV-channel to another one will be described.

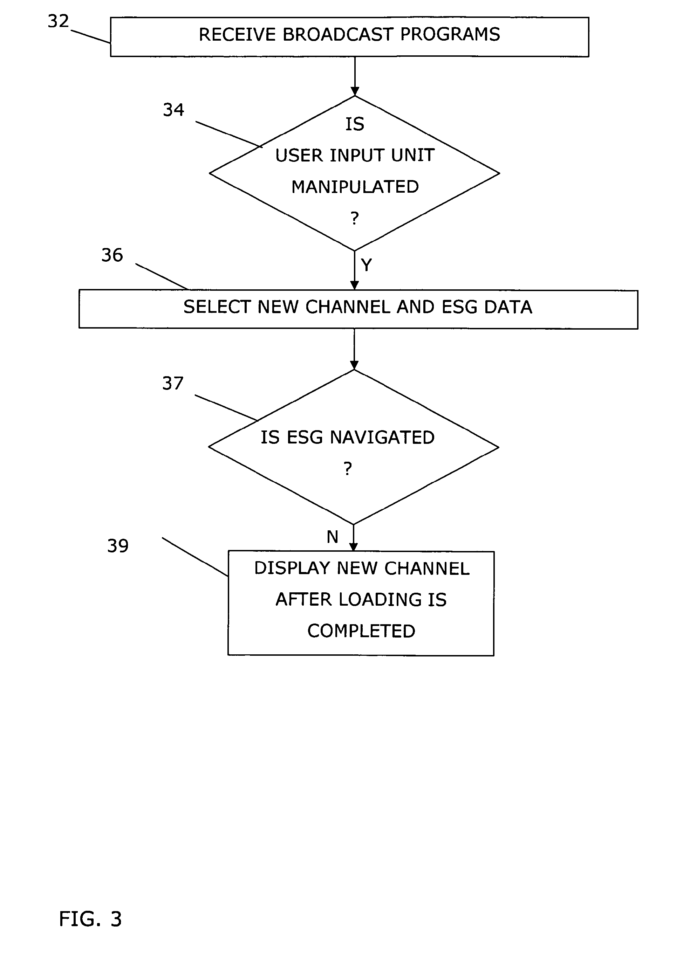

To begin, it is assumed that the mobile phone 10 is operating as a media player and arranged to receive a plurality of media channels, herein broadcast TV channels, of which one is received and displayed on the information presentation unit, herein the display 11, (step 32, Fig. 3). The reception of a broadcast TV-channel in a mobile phone is not described in more detail per se, since it is well known how to receive and display a TV channel in a mobile phone.

In a first step, to switch to a new TV-channel, the user manipulates a user input unit, herein a joystick key 14, typically by a pressing action, for instance upwards or downwards (as indicated by the double-headed arrow in Fig. 1), to select the new TV-channel, step 34 (Fig. 3).

By manipulating the user input unit 14, to select a new media channel, the mobile phone shows thereto related ESG information while the new media channel is loading, step 36 (Fig. 3), until loading of the new channel is completed, whereafter the new media channel is displayed in the display 11 instead of the ESG information, step 39 (Fig. 3).

Optionally, the ESG may further be navigated during loading of the new media channel, step 37, preferably until loading is completed, step 39.

As an alternative embodiment (not shown), as soon as a user input unit 14, typically a program key of the keyboard 15, is touched, but not pressed down, the phone "preselects the new channel and shows the ESG information thereof. When the user then finally presses down the program key to select the new channel, the phone continues to load the already "pre-selected channel".

According to an alternative embodiment of the invention, a remote control including the user input unit(s) could be used for switching channels (selecting channels).

Yet an alternative embodiment of the invention includes a time hysteresis for turning off the ESG mode, preferably before channel selection. This means that the ESG mode will turn off after a particular time has elapsed, up to the new channel is loaded, if the user is not navigating in the ESG.

By means of the invention, for a user, it is possible to take advantage of the time it takes to switch from one media channel to another, instead of just waiting for the new media channel to be loaded, by means of presenting divertive, but relevant information for the new media channel.

## Claims

1. Portable electronic device provided for receiving and selecting a media channel and presentable meta data of a plurality of media channels, which media channel includes video data, audio data or a combination thereof, said electronic device (10) comprising:
means (11) for presenting a media channel,
a receiver (12) for receiving said media channel(s) and meta data,
a control unit (13) for controlling which media channel and/or meta data to be presented and arranged to receive user input for selecting a media channel, and
a user input unit (14) for receiving a media channel selection manipulation performed by the user and providing media channel selection information to the control unit (13) depending on user input, wherein the control unit (13) is arranged to control the means (11) for presenting a media channel to present meta data according to the media channel selection during a period of time up to the time it takes to switch to the selected media channel.

2. Device according to claim 1, wherein the user input unit (14) is a zapping key provided for selecting one of a plurality of channels.

3. Device according to claim 1, wherein the input unit (14) is a numbered key of a keyboard (15).

4. Device according to claim 2 or 3, wherein the user input unit (14), such as a joystick, a rocker key or a pre-sense key, is arranged to provide two different states in response to the manipulation performed by the user, a first state responsive to a touch, and a second state responsive to a press manipulation, wherein in the first state the control unit (13) is arranged to select and display meta data only, preferably in the form of an electronic service guide (ESG), and in the second state, the control unit (13) is arranged to also select presentation data.

5. Device according to any one of the claims 1-4, wherein the user input unit (14) is provided in a remote control communicating with the device.

6. Device according to any one of the previous claims 4-5, wherein the first state is provided with a time hysteresis for turning off the ESG.

7. Method for receiving a media channel and displayable meta data of a plurality of media channels for a portable electronic device, which presentation data includes video data, audio data or a combination thereof, said method comprising the steps of:
- receiving media channel and meta data, step 32,
- receiving user input for selecting a media channel, step 34
- selecting and presenting meta data, and loading the channel depending on user input, in response to a selection manipulation performed by the user, step 36
- possibly navigating meta data, step 37 and
- presenting the selected media channel when loading is completed.
